Europäisches Patentamt

European Patent Office

Office européen des brevets

(19)

(11) Numéro de publication: **0 067 736**
**B1**

## FASCICULE DE BREVET EUROPEEN

(12)

(45) Date de publication du fascicule du brevet:
06.03.85

(21) Numéro de dépôt: 82400902.1

(22) Date de dépôt: 14.05.82

(51) Int. Cl.⁴: **C 04 B 35/46,** H 01 G 4/12,
H 01 B 3/12

(54) Composition céramique diélectrique à base de titanate de baryum, d'oxyde de lithium et de fluorure de cadmium, condensateur utilisant une telle composition, et procédé de fabrication de ladite composition.

(30) Priorité: 26.05.81 FR 8110456

(43) Date de publication de la demande:
22.12.82 Bulletin 82/51

(45) Mention de la délivrance du brevet:
06.03.85 Bulletin 85/10

(84) Etats contractants désignés:
DE GB

(56) Documents cités:
FR - A - 1 024 366
FR - A - 1 283 469
FR - A - 2 397 374
GB - A - 669 941
US - A - 2 815 291
US - A - 4 066 426
US - A - 4 082 906

(73) Titulaire: L.C.C.-C.I.C.E. - COMPAGNIE EUROPEENNE
DE COMPOSANTS ELECTRONIQUES, 50, rue
Jean-Pierre Timbaud B.P. 301, F-92402 Courbevoie (FR)

(72) Inventeur: Lagrange, Alain, THOMSON-CSF
SCPI 173, bld Haussmann, F-75379 Paris Cedex 08 (FR)
Inventeur: Beauger, Alain, THOMSON-CSF SCPI 173 bld
Haussmann, F-75379Paris Cedex 08 (FR)

(74) Mandataire: Vesin, Jacques et al, THOMSON-CSF
SCPI 173, Bld Haussmann, F-75379 Paris Cedex 08 (FR)

## Description

La présente invention concerne une composition céramique diélectrique de nature ferro-électrique, à base de titanate de baryum, ainsi qu'un condensateur utilisant une telle composition. Elle concerne également un procédé de fabrication de cette composition.

Les compositions céramiques à base de titanate de baryum sont bien connues notamment dans leurs applications pour la réalisation de condensateurs. Elles possèdent en effet une très haute constante diélectrique les rendant tout à fait adaptées à une telle utilisation. De telles compositions céramiques bien connues de l'homme de l'art sous l'appellation »type II«, sont décrites par exemple dans les brevets américains 2 402 518, 2 433 211 et 3 529 978.

Généralement, ces compositions céramiques sont frittées à l'air ou sous atmosphère réductrice à des températures voisines de 1200 à 1400°C. Lorsqu'on réalise des condensateurs tels que par exemple des condensateurs du type multicouches, les électrodes métalliques de ces condensateurs sont bien entendu déposées sur la matière céramique avant le frittage. Par conséquent, ceci nécessite d'utiliser des électrodes en métaux précieux tels que le platine, la paladium, l'or ou leurs alliages. Ces électrodes sont généralement déposées par sérigraphie à l'aide d'un écran de soie.

De telles compositions céramiques dans leur utilisation pour la fabrication de condensateurs présentent donc essentiellement deux inconvénients:

— il est nécessaire d'utiliser des métaux précieux pour réaliser les électrodes, ce qui augmente considérablement le coût de tels condensateurs,

— la température de frittage élevée augmente les risques d'interaction entre la céramique et les électrodes, ce qui augmente corrélativement la probabilité de défauts dans lesdites électrodes.

On a donc cherché récemment à mettre au point des compositions céramiques diélectriques permettant d'utiliser des métaux communs, d'un prix beaucoup plus bas en abaissant la température de frittage desdites compositons.

Il a maintenant été trouvé des compositions céramiques diélectriques de type II qui tout en ayant d'excellentes propriétés diélectriques, permettent de résoudre le problème posé ci-dessus. Dans ce but, les compositions céramiques diélectriques selon l'invention sont caractérisées en ce qu'elles comportent de 85% à 97% en poids de titanate de baryum, de 0,5% à 2,5% en poids d'oxyde de lithium et de 2,5% à 12% en poids de fluorure de cadmium.

On a en effet constaté que de manière suprenante, les nouvelles compositions céramiques décrites ci-dessus possédaient une température de frittage nettement abaissée par rapport aux compositions similaires connues tout en ayant des propriétés électriques tout à fait excellentes. En particulier, lesdites compositions possèdent d'excellentes propriétés électriques lorsque l'on utilise un titanate de baryum dans lequel le rapport molaire $X = TiO_2/BaO$ est inférieur à 1, et de préférence compris entre 0,97 et 0,98. Dans ce dernier cas, ainsi qu'on le constatera par la suite, les propriétés électriques de ces compositions sont tout à fait exceptionnelles.

Une telle stoechiométrie dans le titanate de baryum utilisé va tout à fait à l'encontre des idées reçues dans ce domaine lorsqu'on désire abaisser la température de frittage. En effet, l'homme de l'art sait qu'habituellement les compositions à base de titanate de baryum voient leur température de frittage s'abaisser lorsqu'on augmente la stoechiométrie du titanate de baryum, c'est-à-dire lorsqu'on prévoit un excès d'ions titane par rapport au nombre d'ions baryum, de manière à ce que le rapport X précédemment cité soit supérieur à 1. Généralement, cette augmentation est de l'ordre de 2%.

Inversement, il est bien connu qu'une diminution du nombre d'ions titane par rapport au nombre d'ions baryum dans le titanate de baryum conduit habituellement à une augmentation de la température de frittage. (Par température de frittage, on entend bien entendu la température ou plage de températures à laquelle on obtient une densification maximum du produit).

Selon un mode préférentiel de réalisation, les compositions céramiques diélectriques selon l'invention sont telles que l'oxyde de lithium est introduit dans la composition sous forme d'un sel de lithium capable de le libérer à haute température. De préférence, ce sel de lithium sera choisi parmi les nitrates, sulfates ou carbonates de lithium. Dans ce cas, les proportions en poids du sel de lithium seront telles qu'après décomposition dudit sel à haute température, on obtienne une quantité d'oxyde de lithium comprise dans la fourchette mentionnée ci-dessus.

Il faut bien comprendre en effet que si l'on introduit dans la composition de dépat un sel de lithium capable de libérer de l'oxyde de lithium $Li_2O$, il importe de ne compter dans le poids de la composition que la fraction molaire du sel correspondant à l'oxyde de lithium. Par exemple, si l'on introduit dans la composition 30 g de carbonate de lithium $Li_2CO_3$, qui libérera à haute température l'oxyde de lithium et le gaz carbonique, celui-ci ne comptera que pour

$$30\ g \times \frac{\text{poids moléculaire } Li_2O}{\text{poids moléculaire } Li_2CO_3},$$

soit

2

$$30 \text{ g} \times \frac{29,88}{73,88} = 12,13 \text{ g.}$$

D'une manière générale, la température de frittage des compositions selon l'invention variera entre 750° C et 1000° C.

Le procédé de réalisation des condensateurs selon l'invention consiste donc à réaliser une chamotte contenant le titanate de baryum, le fluorure de cadmium et le sel de lithium dans les proportions indiquées ci-dessus, puis à réaliser ensuite le condensateur de manière connue en soi, la température de frittage étant supérieure ou égale à 750° C.

L'invention sera mieux comprise à l'aide des exemples de réalisation suivants, donnés à titre non limitatif:

## Exemples 1 à 4

Dans un broyeur à billes, on introduit 100 g d'un mélange contenant du titanate de baryum $BaTiO_3$, du fluorure de cadmium $CdF_2$ et du carbonate de lithium $Li_2CO_3$. Le carbonate de lithium libérera après frittage de l'oxyde de lithium $Li_2O$. Dans le tableau I ci-dessous, on donne le pourcentage pondéral des différents éléments de la composition, le pourcentage en poids de carbonate de lithium étant ramené à son pourcentage en poids correspondant en oxyde de lithium $Li_2O$ (voir ci-dessus).

Le broyage de ces différents composants est effectué en présence de 150 $cm^3$ d'alcool à l'aide de 200 g de billes d'alumine, durant 15 heures.

La barbotine obtenue est séchée, tamisée et mélangée ensuite à 130 g de latex à 3% dans le trichloréthane. La pâte obtenue est mise sous forme de disques qui, après frittage, ont un diamètre de 8,3 mm et 0,6 mm environ d'épaisseur. Ces disques sont frittés à une température de 930° C, sous air, et pendant une heure trente minutes. Chacune des faces des condensateurs est alors métallisée à l'aide d'une pâte d'argent.

Les résultats obtenus sont indiqués dans le tableau I cidessous, dans lequel d désigne la densité de la céramique, R le retrait linéaire, C la capacité, et tangente $\delta$ les pertes diélectriques mesurées à 1 KHz sous 1 volt efficace, $\varepsilon$ la constante diélectrique du matériau, RI la résistance d'isolement du condensateur mesuré sous 50 volts et $\Delta C/C$ la variation relative de capacité entre la valeur de la capacité à 20° C et celle de celle-ci aux différentes températures mentionnées ($-30° C$, $+10° C$ et $+85° C$).

Par effet de champ (à 600 volts) on entend la variation relative de capacité

$$\Delta C/C = \frac{C_0 - C_{600}}{C_0},$$

$C_0$ étant la valeur de la capacité mesurée à 1 KHz sous 1 V eff., sans polarisation continue, $C_{600}$ étant la valeur de la capacité mesurée dans les mêmes conditions mais sous une polarisation continue de 600 Volts. Compte tenu de l'épaisseur des disques de 0,6 mm, ceci représente une tension de polarisation de 1 V/micron.

Par ailleurs, TC désigne la température de Curie du matériau, température au-dessus de laquelle celui-ci est paraélectrique et endessous de laquelle il est ferro-électrique.

La stoechiométrie du titanate de baryum utilisé est telle que le rapport $X = TiO_2/BaO$ était égale à 0,97, c'est-à-dire que l'on a un excès de baryum par rapport au titane.

Tableau I

| | Exemples N° | | | |
|---|---|---|---|---|
| | 1 | 2 | 3 | 4 |
| $BaTiO_3$(%) | 96,63 | 93,4 | 90,3 | 87,3 |
| $Li_2O$(%) | 0,55 | 1,1 | 1,6 | 2,1 |
| $CdF_2$(%) | 2,82 | 5,5 | 8,1 | 10,6 |
| $d(g/m^3)$ | 5,36 | 5,53 | 5,46 | 4,44 |
| R(%) | 14,0 | 16,4 | 17,1 | 17,25 |
| C(pF) | 2718 | 4899 | 4290 | 3840 |
| tg $\delta \times 10^{+4}$ | 97 | 54 | 38 | 16 |
| $\varepsilon$ (20°C) | 4373 | 6775 | 6806 | 6038 |
| RI (G$\Omega$) | 220 | 350 | 500 | 220 |
| $\Delta$C/C | | | | |
| −30° | −15% | −12% | +11% | +17% |
| +10° | −2% | +8% | +14% | +25% |
| +85° | −36% | −60% | −59% | −58% |
| Effets de champ (%) (600 v) soit 1 V/$\mu$ | −15,8 | −38,2 | −34,2 | −30,2 |
| $\varepsilon$ à TC | 4400 | 7600 | 8400 | 8000 |
| TC (°C) | +15 | +5 | −10 | −10 |

Ce tableau montre clairement les variations des propriétés des compositions diélectriques selon l'invention pour une stoechiométrie donnée du titanate de baryum en fonction du taux de fluorure de cadmium utilisé. On constate que la valeur de la constante diélectrique est particulièrement élevée, alliée à de très faibles pertes diélectriques une résistance d'isolement élevée, et faible variation de capacité sous tension (effet de champ).

## Exemples 5 à 9

Les exemples ci-après montrent clairement l'influence de la stoechiométrie du titanate de baryum utilisé pour une concentration donnée de fluorure de cadmium égale 5,5% en poids et d'oxyde de lithium (introduit sous forme de carbonate de lithium) égale à 1,1% en poids.

La préparation des disques et des condensateurs de ces exemples de réalisation est en tout point identique à celle définie dans les exemples 1 à 4 précédents.

Les résultats obtenus sont mentionnés dans le tableau II cidessous:

Tableau II

| | Exemples N° | | | | |
|---|---|---|---|---|---|
| | 5 | 6 | 7 | 8 | 9 |
| $TiO_2/BaO$ | 0,94 | 0,97 | 0,98 | 0,99 | 1,03 |
| d (g/cm³) | 5,47 | 5,53 | 5,69 | 5,46 | 3,96 |
| R(%) | 17,7 | 16,4 | 16,4 | 15,3 | 6,1 |
| C (pF) | 2050 | 4899 | 5120 | 2276 | 1765 |
| $tg\ \delta \times 10^{-4}$ | 86 | 54 | 90 | 70 | 234 |
| $\varepsilon$ (20°C) | 3031 | 6775 | 7551 | 3226 | 1996 |
| RI (GΩ) | 170 | 350 | 1100 | 400 | 40 |
| $\Delta C/C$ | | | | | |
| −30° | +15% | −12% | −28% | −32% | −33% |
| +10° | +3% | +8% | −1% | −6% | −13% |
| +85° | −345% | −60% | −65% | −36% | +6% |
| Effets de champ (%) (600 v) soit 1 V/µ | −19,3 | −38,2 | −44,4 | −29 | −33 |
| $\varepsilon$ à TC | 3500 | 7600 | 7750 | 3300 | 2250 |
| TC (°C) | −10 | +5 | +5 | +40 | +90 |

On constate d'après ce tableau que les meilleurs résultats sont obtenus pour une valeur X du rapport stoechiométrique de $TiO_2/BaO$ variante entre 0,97 et 0,98.

## Revendications

1. Composition céramique diélectrique, caractérisée en ce qu'elle comporte de 85% à 97% en poids de titanate de baryum, de 0,5% à 2,5% en poids d'oxyde de lithium et de 2,5% à 12% en poids de fluorure de cadmium.

2. Composition céramique diélectrique selon la revendication 1, caractérisée en ce qu'elle comporte un titanate de baryum dans lequel le rapport molaire $X = TiO_2/BaO$ est inférieur à 1.

3. Composition céramique diélectrique selon la revendication 2, caractérisée en ce que X est supérieur ou égal à 0,97 et inférieur ou égal à 0,98.

4. Composition céramique diélectrique selon l'une des revendications 1 à 3, caractérisée en ce que l'oxyde de lithium présent dans cette composition est introduit sous forme d'un sel de lithium capable de le libérer à haute température.

5. Composition céramique diélectrique selon la revendication 4, caractérisée en ce que le sel de lithium est choisi parmi les nitrates, sulfates ou carbonates de lithium.

6. Condensateur électrique comportant au moins une couche diélectrique revêtue d'armatures métalliques conductrices, caractérisé en ce que la couche diélectrique est constituée d'une composition conforme à l'une des revendications 1 à 5.

7. Procédé de fabrication d'un condensateur électrique, caractérisé en ce qu'il consiste à réaliser une chamotte comportant notamment une composition céramique diélectrique selon l'une des revendications 1 à 5, l'oxyde de lithium étant introduit sous forme d'un sel de lithium, à réaliser ensuite à l'aide de ladite chamotte le condensateur de manière connue en soi, ledit condensateur possédant une couche céramique diélectrique ayant été frittée à une température supérieure ou égale à 750°C, température à laquelle le sel de lithium est décomposé et engendre notamment de l'oxyde de lithium.

**Patentansprüche**

1. Dielektrische keramische Zusammensetzung, dadurch gekennzeichnet, daß sie 85 bis 97 Gewichtsprozent Bariumtitanat, 0,5 bis 2,5 Gewichtsprozent Lithiumoxid und 2,5 bis 12 Gewichtsprozent Kadmiumfluorid enthält.

2. Dielektrische keramische Zusammensetzung nach Anspruch 1, dadurch gekennzeichnet, daß sie ein Bariumtitanat enthält, in welchem das Molekülverhältnis $X = TiO_2/BaO$ kleiner als 1 ist.

3. Dielektrische keramische Zusammensetzung nach Anspruch 2, dadurch gekennzeichnet, daß X größer als oder gleich 0,97 und kleiner als oder gleich 0,98 ist.

4. Dielektrische keramische Zusammensetzung nach einem der Ansprüche 1 bis 3, dadurch gekennzeichnet, daß das in dieser Zusammensetzung vorhandene Lithiumoxid in Form eines Lithiumsalzes eingebracht ist, das es bei hoher Temperatur freisetzen kann.

5. Dielektrische keramische Zusammensetzung nach Anspruch 4, dadurch gekennzeichnet, daß das Lithiumsalz unter den Salzen Lithiumnitrat, Lithiumsulfat und Lithiumkarbonat ausgewählt ist.

6. Elektrischer Kondensator, der wenigstens eine dielektrische Schicht umfaßt, welche mit leitfähigen metallischen Belägen bedeckt ist, dadurch gekennzeichnet, daß die dielektrische Schicht aus einer Zusammensetzung nach einem der Ansprüche 1 bis 5 gebildet ist.

7. Verfahren zur Herstellung eines elektrischen Kondensators, dadurch gekennzeichnet, daß es darin besteht, eine Schamotte herzustellen, die insbesondere eine dielektrische keramische Verbindung nach einem der Ansprüche 1 bis 5 enthält, wobei das Lithiumoxid in Form eines Lithiumsalzes eingebracht wird, anschließend der Kondensator mittels der Schamotte in an sich bekannter Weise hergestellt wird, wobei der Kondensator eine dielektrische keramische Schicht aufweist, die bei einer Temperatur von 750°C oder mehr gesintert wurde, wobei sich das Lithiumsalz bei dieser Temperatur zersetzt und insbesondere Lithiumoxid erzeugt.

**Claims**

1. Dielectric ceramic composition, characterized in that it comprises 85 to 97% by weight of barium titanate, 0.5 to 2.5% by weight of lithium oxide and 2.5 to 12% by weight of cadmium fluoride.

2. Dielectric ceramic composition according to claim 1, characterized in that it comprises a barium titanate wherein the molecular ratio $X = TiO_2/BaO$ is less than 1.

3. Dielectric ceramic composition according to claim 2, characterized in that X is greater than or equal to 0.97 and smaller than or equal to 0.98.

4. Dielectric ceramic composition according to any of claims 1 to 3, characterized in that the lithium oxide present in this compositions is introduced as a lithium salt capable of releasing lithium oxide at high temperature.

5. Dielectric ceramic composition according to claim 4, characterized in that the lithium salt is selected among the lithium nitrates, sulfates or carbonates.

6. Electric capacitor comprising at least one dielectric layer covered by metallic conductive coatings, characterized in that the dielectric layer is formed of a composition in accordance with any of claims 1 to 5.

7. Method of producing an electric capacitor, characterized in that it consists in forming a chamotte comprising, in particular, a dielectric ceramic composition according to any of claims 1 to 5, the lithium oxide being introduced in the form of a lithium salt, subsequently producing said capacitor in a manner known per se by beans of said chamotte, said capacitor having a dielectric ceramic layer having been sintered at a temperature exceeding or equal to 750"C, the lithium salt being decomposed at this temperature in a manner to produce lithium oxide in particular.